# FASCICULE DE BREVET EUROPEEN

(11) **EP 0 518 743 B1**
(45) Date de publication et mention de la délivrance du brevet: **20.09.1995**
(21) Numéro de dépôt: 92401558.9
(22) Date de dépôt: 05.06.1992
(51) Int. Cl.: B60J 7/047

(54) **Un dispositif d'ouverture et de fermeture de toit, entrebâillant et coulissant, notamment pour véhicule automobile**
Öffnungs- und Verschlussvorrichtung für Schiebehebedach, insbesondere für Kraftfahrzeug
Device for opening and closing of a roof, half-opening or gliding, in particular for motor-vehicle

(30) Priorité: 10.06.1991 FR 9107031
(43) Date de publication de la demande: 16.12.1992
(73) Titulaire: WEBASTO HEULIEZ : Société à Responsabilité Limitée, F-85700 Les Châtelliers -Châteaumur (FR)
(72) Inventeur: Cheron, Christian, F-49000 Angers (FR); Thierry, Pierre, F-49300 Cholet (FR); De Gaillard, François, F-85390 Mouilleron en Pareds (FR)
(74) Mandataire: Keib, Gérard

(56) Documents cités:
- FR-A- 2 525 159
- FR-A- 2 601 303
- GB-A- 2 133 750

## Description

L'invention concerne un dispositif d'ouverture et de fermeture de toit, notamment pour véhicule automobile, comprenant une paire de rails fixés sur le dessus du pavillon du véhicule, de part et d'autre d'une ouverture dans le pavillon, une paire de chariots avant et une paire de chariots arrière mobiles en translation longitudinale dans les rails, lesdits chariots étant commandés en translation par une paire de câbles, et un mécanisme d'articulation en relation fonctionnelle avec les chariots et une paire de coulisses portant un panneau mobile pour entrebâiller le panneau mobile et le coulisser au dessus du pavillon du véhicule, chaque coulisse ayant une partie avant et une partie arrière.

D'une façon générale, un tel dispositif d'ouverture et de fermeture de toit est fixé directement sur le dessus du pavillon d'un véhicule en seconde monte. Ces dispositifs connus ont l'inconvénient de présenter une épaisseur importante au dessus du pavillon du véhicule. Cette épaisseur augmente sensiblement le coefficient frontal de pénétration dans l'air du véhicule, pénalisant ainsi les performances du véhicule. Par ailleurs, les aspérités de la surface du pavillon constituées par l'épaisseur d'un tel dispositif engendrent des turbulences génératrices d'un bruit désagréable pour les passagers du véhicules. En outre son épaisseur importante est préjudiciable pour l'esthétique générale du véhicule.

Jusqu'à présent, les mécanismes d'articulation du panneau mobile pour obtenir son entrebâillement et son coulissement au dessus du pavillon du véhicule, dans le cas d'un dispositif d'ouverture et de fermeture de toit fixé sur le dessus du pavillon du véhicule, nécessite de prévoir une hauteur importante des rails et donc une épaisseur importante du dispositif d'ouverture et de fermeture de toit pour loger l'ensemble des organes utiles à la réalisation des fonctions d'entrebâillement et de coulissement du panneau mobile.

L'objet de la présente invention est de pallier ces inconvénients de l'état de la technique. En particulier, un objectif de l'invention est de proposer un dispositif d'ouverture et de fermeture de toit présentant une épaisseur au dessus du pavillon du véhicule, la plus réduite possible et inférieure à 18 mm.

Essentiellement le dispositif d'ouverture et de fermeture de toit selon l'invention comprend une première paire de chariots avant en relation fonctionnelle avec des premiers chemin de guidage disposés à l'avant de la coulisse pour élever le panneau mobile au dessus du pavillon lors de son coulissement, et une seconde paire de chariots arrière en relation fonctionnelle avec des seconds, troisièmes et quatrièmes chemins de guidage disposés à l'arrière de la coulisse, par l'intermédiaire d'une paire de biellettes, pour élever le panneau mobile au dessus du pavillon lors de son coulissement et pour l'entrebâiller. Les biellettes permettent de réduire substantiellement la hauteur des rails et donc l'épaisseur du dispositif d'ouverture et de fermeture de toit tout en conservant les possibilités d'entrebâillement et de coulissement du panneau mobile au dessus du pavillon du véhicule.

Plus spécifiquement l'invention concerne un dispositif d'ouverture et de fermeture de toit, notamment pour véhicule automobile, comprenant:
- une paire de rails fixés sur le dessus du pavillon du véhicule, de part et d'autre d'une ouverture dans le pavillon;
- une paire de chariots avant et une paire de chariots arrière mobiles en translation longitudinale dans les rails, lesdits chariots étant commandés en translation par une paire de câbles; et
- un mécanisme d'articulation en relation fonctionnelle avec les chariots et une paire de coulisses portant un panneau mobile pour entrebâiller le panneau mobile et le coulisser au dessus du pavillon du véhicule, chaque coulisse ayant une partie avant et une partie arrière;
caractérisé en ce que le mécanisme d'articulation comprend:
- des premiers chemins de guidage aménagés dans l'épaisseur de la coulisse à l'avant de celle-ci;
- des seconds chemins de guidage aménagés dans l'épaisseur de la coulisse à l'arrière de celle-ci;
- des troisièmes chemins de guidage aménagés dans l'épaisseur de la coulisse et sensiblement superposés aux seconds chemins de guidage;
- des quatrièmes chemins de guidage aménagés dans l'épaisseur de la coulisse et en arrière des seconds et troisièmes chemins de guidage;
- une paire de biellettes portant chacune un premier, un second et un troisième organe de commande venant respectivement se loger et se déplacer dans un second, troisième et quatrième chemin de guidage, chaque biellette étant reliée en rotation à un chariot arrière (10) et chaque chariot avant portant un quatrième organe de commande venant se loger et se déplacer dans un premier chemin de guidage.

D'autre caractéristiques et avantages de l'invention apparaîtront encore mieux à la lecture de la description qui suit faite en référence aux dessins annexés.

La figure 1 est une vue en perspective éclatée du dispositif d'ouverture et de fermeture de toit selon l'invention.

La figure 2 est une vue en perspective du mécanisme d'articulation du panneau mobile selon l'invention.

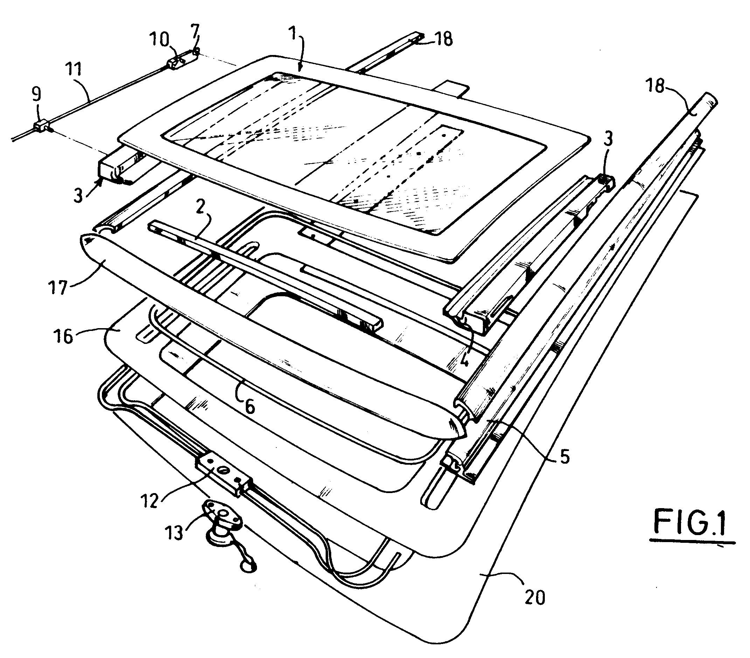

Sur la figure 1, le dispositif d'ouverture et de fermeture de toit selon l'invention comprend une tôle gouttière 16 et son joint d'étanchéité 20 venant se fixer sur le dessus du pavillon 8 et présentant une partie intérieure épousant sensiblement la forme d'une ouverture aménagée dans le pavillon du véhicule, une paire de rails 5 (un seul étant représenté sur cette figure) disposés de part et d'autre des côtés latéraux de l'ouverture et fixés au pavillon du véhicule, deux paires de chariots 9, 10, mobiles en translation longitudinale dans les rails 5, une paire de coulisses 3 portant un panneau mobile 1 et en relation fonctionnelle avec les chariots mobiles 9, 10 pour entrebâiller et/ou coulisser le panneau mobile au-dessus du pavillon du véhicule sous l'action d'une paire de câbles 11. Les câbles 11 mobiles en translation dans des directions opposées sont commandés dans un tube guide câble assemblé 12 par un boîtier manivelle 13 ou par tout moyen d'entraînement de câbles analogue, par exemple un moteur électrique. Des éléments de garniture tels qu'un enjoliveur avant 17 et une paire d'enjoliveurs latéraux 18 sont placés respectivement à l'avant du dispositif d'ouverture et de fermeture de toit et sur les côtés latéraux de celui-ci pour recouvrir les rails 5. Eventuellement, les enjoliveurs latéraux 18 peuvent être formés dans les rails 5. Par ailleurs, le panneau mobile 1 est soutenu, à l'avant, dans sa dimension transversale par un renfort avant 2. Un joint d'étanchéité 6 est placé sur le pourtour de l'ouverture dans le pavillon entre la tôle gouttière 16 et le panneau mobile 1. Les deux paires de chariots mobiles 9, 10 sont constituées d'une première paire de chariots avant 9 et d'une seconde paire de chariots arrière 10, un chariot avant et un chariot arrière étant commandés par le même câble 11. Les coulisses 3 sont, en outre, renforcées dans leur largeur par un renfort 4.

On devra considérer que le dispositif d'ouverture et de fermeture de toit selon l'invention tel que décrit précédemment est destiné à être posé sur le dessus du pavillon d'un véhicule, notamment première et en seconde monte.

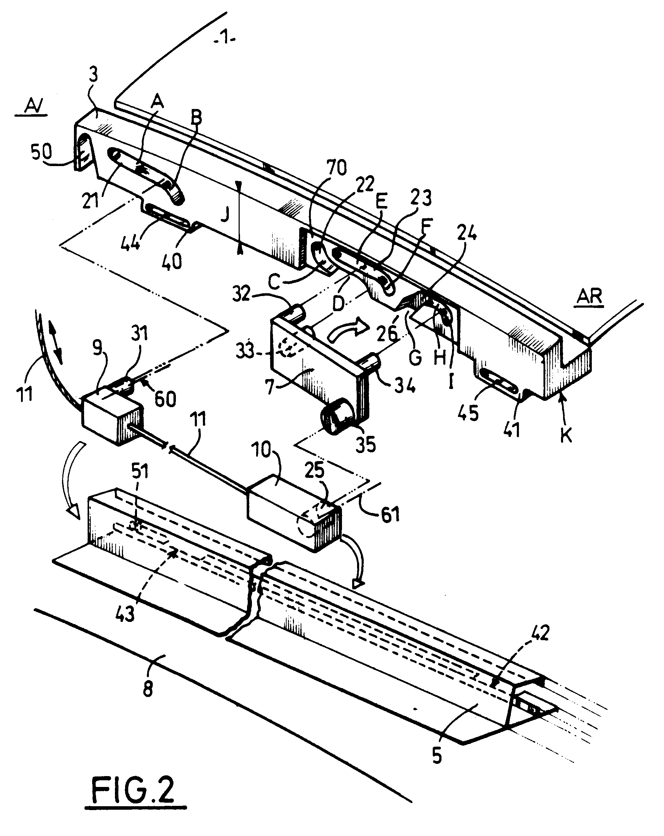

En se reportant maintenant à la figure 2, on a représenté le côté droit du dispositif d'ouverture et de fermeture de toit de la figure 1, pour faire apparaître le mécanisme droit d'articulation du panneau mobile. On devra considérer que les deux mécanismes d'articulation droit et gauche sont symétriques de sorte que nous décrirons par la suite seulement le mécanisme d'articulation placé à la droite du dispositif d'ouverture et de fermeture de toit selon l'invention tel qu'il est représenté sur la figure 1.

Sur la figure 2, le mécanisme d'articulation comprend des chemins de guidage 21, 22, 23, 24 aménagés dans l'épaisseur de la coulisse 3, une biellette 7 portant des organes de commande 32, 33, 34 venant se loger et de déplacer respectivement dans les chemins de guidage 22, 23, 24, un chariot arrière 10 en relation fonctionnelle avec la biellette 7 et un chariot avant 9 portant un plot 31 venant se loger et se déplacer dans le chemin de guidage 21. Le chariot avant 9 et le chariot arrière 10 sont reliés entre eux par un câble 11 qui se prolonge à partir du chariot avant 9 pour être engagé dans le tube guide-câble assemblé 12. Par conséquent, les deux chariots avant et arrière 9 et 10 se déplacent en translation longitudinale sous l'action du câble 11 dans le rail 5 qui longe le côté latéral de l'ouverture. Comme cela est représenté sur cette figure, la coulisse 3 a une longueur sensiblement égale à une dimension latérale du panneau mobile 1 et présente une section sensiblement en forme de L pour porter le panneau mobile 1 qui est fixé à celle-ci par collage ou par tout autre moyen équivalent.

Le chemin de guidage 21 est disposé à l'avant de la coulisse en vis-à-vis du chariot avant 9 tandis que les chemins de guidage 22, 23 et 24 sont disposés sensiblement à l'arrière de la coulisse en vis-à-vis du chariot arrière 10. Le chemin de guidage 23 est en outre sensiblement superposé au chemin de guidage 22 tandis que le chemin de guidage 24 est disposé à l'arrière des deux chemins de guidage 22 et 23.

Un renfoncement 70 au voisinage des chemins de guidage 22, 23, 24 est aménagé dans l'épaisseur de la coulisse 3 pour recevoir la biellette 7. Les plots de commande 32, 33 et 34 sont fixés à la biellette 7 sur sa face interne par rapport à l'ouverture dans le pavillon du véhicule, c'est-à-dire par rapport au panneau mobile 1, pour coulisser dans les chemins de guidage 22, 23 et 24. Ainsi, que cela apparaît sur cette figure, les deux plots de commande 32 et 33 sont superposés à une extrémité de la biellette en position de fermeture du pavillon, le troisième plot de commande 34 étant disposé à l'autre extrémité de la biellette. La biellette 7 est par ailleurs reliée au chariot 10 par un plot de rotation 35 fixé à la biellette sur sa face extérieure par rapport à l'ouverture, le plot de rotation 35 venant se loger dans un évidement 25 aménagé dans l'épaisseur du chariot arrière 10 pour tourner librement dans cet évidement. Par conséquent, la biellette 7 et le chariot arrière 10 sont montés à rotation autour d'un axe 61 mobile en translation longitudinale le long du rail 5. Par ailleurs, le plot de rotation 35 et le plot de commande 34 ont des axes longitudinaux sensiblement superposés en position de fermeture du pavillon.

Le chemin de guidage 21 comporte, dans la direction avant vers arrière de la coulisse 3, une partie A sensiblement horizontale suivie d'une partie incurvée B se rapprochant du pavillon du véhicule. Le chemin de guidage 22 comporte, dans la même direction, une partie C incurvée se rapprochant du pavillon suivie d'une partie D sensiblement horizontale et présentant une seule paroi de guidage du plot de commande 33. Le chemin de guidage 23 comporte dans cette même direction, une partie horizontale E sensiblement parallèle à la partie horizontale D, suivie d'une partie incurvée F se rapprochant du pavillon. Le chemin de guidage 24 comporte, toujours dans la même direction, avant vers arrière de la coulisse 3, une partie incurvée G s'éloignant du pavillon et ayant une extrémité débouchante, suivie d'une partie H sensiblement horizontale et parallèle à la partie E, suivie elle-même d'une partie I incurvée se rapprochant du pavillon.

La coulisse 3 comporte deux bossages 40, 41 aménagés sur la surface inférieure K de la coulisse, ces bossages ayant des arêtes formant butées dans des évidements 42, 43 correspondants, aménagés dans le rail 5 en vis-à-vis de la coulisse pour bloquer sa en position de fermeture du pavillon et pour empêcher tout mouvement vertical non désiré du panneau mobile dans l'ouverture. Un mouvement vertical du panneau mobile par rapport à la surface du pavillon doit être réalisé seulement lorsque le panneau mobile est superposé au joint d'étanchéité 6, c'est à dire quand les bossages 40,41 des coulisses sont en vis-à-vis respectivement des évidements 42,43 dans les rails. Des évidements 44, 45 sont réalisés dans les bossages 40, 41 dans la largeur et l'épaisseur de la coulisse 3 pour rattraper le jeu du panneau mobile dans la direction verticale perpendiculaire à la surface du pavillon et pour éliminer les effets de bruit, par amortissement, lorsque le panneau mobile est coulisser sur le dessus du pavillon. L'amortissement est obtenu par la déformation dans la direction verticale des bossages 41,42.

Une découpe en U 50 est réalisée dans l'épaisseur de la coulisse 3 à son extrémité avant, l'ouverture du U étant en vis-à-vis du pavillon, pour venir en prise avec un plot de blocage 51 faisant saillie au-dessus du rail 5 en vis-à-vis de la coulisse 3. Bien entendu le plot de blocage 51 peut tout aussi bien sur un autre élément du dispositif d'ouverture et de fermeture de toit. Par conséquent, la découpe en U 50, le plot de blocage 51 constituent un moyen de verrouillage de la course du panneau mobile lorsque celui-ci est en position d'entrebâillement ou de fermeture.

Nous allons maintenant décrire le fonctionnement du mécanisme d'articulation selon l'invention.

Comme décrit précédemment, le chariot avant 9 et le chariot arrière 10 sont simultanément déplacés en translation longitudinale dans le rail 5 lors de la manoeuvre du boîtier manivelle 13. Ces chariots 9, 10 peuvent être déplacés dans deux directions opposées, à savoir une direction avant (vers l'avant du véhicule) pour entrebâiller le panneau mobile, et une direction arrière (vers l'arrière du véhicule) pour décoller le panneau mobile du joint d'étanchéité 6, c'est-à-dire l'élever selon une direction verticale au-dessus du pavillon 8, puis le coulisser vers l'arrière du pavillon. En position de fermeture du pavillon, le plot de commande 31 logé dans le chemin de commande 21 se trouve sensiblement à la position de jonction entre la partie horizontale A et la partie incurvée B. Le plot de commande 32 logé dans le chemin de guidage 23 se trouve sensiblement à une position centrale dans la partie horizontale E. Le plot de commande 33, logé dans le chemin de guidage 22, se trouve sensiblement à une position centrale dans la partie horizontale D. Le plot de commande 26, logé dans le chemin de guidage 24, se trouve sensiblement à une position centrale dans la partie horizontale H. En position de fermeture du pavillon, les plots de commande 31, 32, 34 sont sensiblement alignés horizontalement par rapport au rail 5.

Selon la première direction de manoeuvre du boîtier manivelle 13, les chariots 9, 10 se déplaçant vers l'avant du pavillon, commandent le déplacement des plots de commande 31, 32, 33, 34 dans les chemins de guidage 21, 22, 23, 24. Selon cette direction de déplacement des chariots 9, 10, le plot de commande 31 se déplace dans la partie A horizontale du chemin de guidage 21. Ce déplacement du plot de commande 31 a pour effet de maintenir la partie avant de la coulisse dans un niveau bas correspondant à son niveau en position de fermeture du pavillon. Dans cette position de la coulisse 3, la découpe en U 50 est en prise avec le plot de blocage 51 pour verrouiller le déplacement en translation du panneau mobile. Le déplacement du chariot arrière 10 vers l'avant commande respectivement le déplacement du plot de commande 32 vers une extrémité de la partie horizontale E du chemin de guidage 23, le déplacement du plot de commande 33 dans la partie incurvée C du chemin de guidage 22, et le déplacement du plot de commande 34 dans la partie incurvée G du chemin de guidage 24. Le déplacement du chariot arrière 10, selon cette direction de manoeuvre, a pour conséquence de faire pivoter la biellette 7 autour de l'axe 61 par l'intermédiaire du plot de rotation 35 et de l'évidement 25 ainsi que le pivotement du plot de commande 33 par rapport au plot de commande 32. En continuant cette manoeuvre, le plot de commande 34 se dégage du chemin de guidage 24, par l'extrémité débouchant 26 de celui-ci, de sorte que la biellette de forme sensiblement rectangulaire pivote jusqu'à ce que sa grande longueur se trouve sensiblement en position verticale en faisant un angle avec l'axe longitudinal du chariot arrière 10 inférieur à 90°. Dans cette position de la biellette, le panneau mobile 1 est entrebâillé au-dessus du pavillon 8 du véhicule, le plot de commande 31 bloqué à l'extrémité de la partie horizontale A du chemin de guidage 21 jouant alors le rôle d'un axe d'articulation 60 du panneau mobile. Dans cette position entrebâillée du panneau mobile, la biellette 7 est immobilisée par les deux plots de commande 32, 33 en butée à l'extrémité des parties C, E des chemins de guidage 22, 23. Dans le cas d'une utilisation électrique du dispositif de manoeuvre de câbles, le débattement de la biellette est contrôlé par des micro-relais intégrés au dispositif de manoeuvre de câbles 13.

Selon la seconde direction de manoeuvre du boîtier manivelle 14, les chariots 9, 10 se déplacent vers l'arrière du pavillon soit depuis la position d'entrebâillement du panneau mobile ou depuis sa position de fermeture. Dans le premier cas, les plots de commande 31, 32, 33, 34 effectuent le trajet inverse de celui explicité ci-dessus jusqu'à obtenir la position de fermeture du pavillon. Depuis cette position, et sous l'action des chariots 9, 10 entraînés selon la seconde direction de manoeuvre, le plot de commande 31 s'engage dans la partie incurvée B du chemin de guidage 21. Selon cette même direction de manoeuvre, le plot de commande 32 s'engage dans la partie incurvée F du chemin de guidage 23, le plot de commande 33 se dégage de la partie horizontale D du chemin de guidage 22, et le plot de commande 34 s'engage dans la partie incurvée I du chemin de guidage 24. La biellette 7 pivote autour de l'axe 61 sous l'action des plots de commande 31, 32, 34, s'engageant dans les parties incurvées B, F, I pour élever dans son ensemble la coulisse 3 et donc le panneau mobile 1 au-dessus du pavillon, dégageant ainsi la découpe en U 50 du plot de blocage 51 et les bossages 40,41 des évidements 42,43, et coulisser le panneau mobile vers l'arrière du pavillon au-dessus de celui-ci. Par conséquent, selon cette seconde manoeuvre, le panneau mobile 1 est décollé du joint d'étanchéité 6 par une première opération d'élèvement, puis est coulissé pardessus le pavillon pour dégager l'ouverture. Dans cette position, les bossages 40,41 grâce aux évidements 44,45 amortissent les déplacements verticaux du panneau mobile par rapport au pavillon. Lors de la fermeture du pavillon par coulissement dans la direction inverse du panneau mobile par rapport au pavillon, les bossages 40,41 maintiennent le panneau mobile en position surélevée par rapport au joint d'étanchéité 6 pour empêcher les frottements du panneau 1 sur le joint 6. Cette position de sur-élévation est conservée jusqu'à ce que les bossages 40,41 viennent en vis-à-vis des évidements 42,43 pour abaisser le panneau 1 sur le joint 6, cette position abaissée du panneau mobile correspondant à la fermeture du pavillon.

Ainsi que cela vient d'être décrit, les deux fonctionnalités d'entrebâillement et de coulissement au-dessus du pavillon sont réalisées par le dispositif d'ouverture et de fermeture de toit selon l'invention, grâce à la cinématique de la biellette 7. On comprendra que l'entrebâillement plus ou moins important du panneau mobile dépend de la grande dimension de la biellette 7. Par conséquent, la capacité d'entrebâillement du dispositif d'ouverture et de fermeture de toit selon l'invention est indépendante de la hauteur J de la coulisse. Ainsi, selon l'invention, on réalise un dispositif d'ouverture et de fermeture de toit ayant une épaisseur inférieure ou égale à 18 mm.

Bien entendu, l'invention n'est pas limitée à l'exemple de réalisation ci-dessus décrit et on pourra bien évidemment prévoir d'autres variantes sans pour cela sortir du cadre de l'invention.

## Revendications

1. Un dispositif d'ouverture et de fermeture de toit, notamment pour véhicule automobile, comprenant:
- une paire de rails (5) fixés sur le dessus du pavillon (8) du véhicule, de part et d'autre d'une ouverture dans le pavillon;
- une paire de chariots avant (9) et une paire de chariots arrière (10) mobiles en translation longitudinale dans les rails, lesdits chariots étant commandés en translation par une paire de câbles (11); et
- un mécanisme d'articulation en relation fonctionnelle avec les chariots et une paire de coulisses (3) portant un panneau mobile (1) pour entrebâiller le panneau mobile et le coulisser au dessus du pavillon du véhicule, chaque coulisse ayant une partie avant et une partie arrière;
caractérisé en ce que le mécanisme d'articulation comprend:
- des premiers chemins de guidage (21) aménagés dans l'épaisseur de la coulisse à l'avant de celle-ci;
- des seconds chemins de guidage (22) aménagés dans l'épaisseur de la coulisse à l'arrière de celle-ci;
- des troisièmes chemins de guidage (23) aménagés dans l'épaisseur de la coulisse et sensiblement superposés aux seconds chemins de guidage (22) ;
- des quatrièmes chemins de guidage (24) aménagés dans l'épaisseur de la coulisse et en arrière des seconds et troisièmes chemins de guidage (22,23);
- une paire de biellettes (7) portant chacune un premier, un second et un troisième organes de commande (32,33,34) venant respectivement se loger et se déplacer dans un second, troisième et quatrième chemin de guidage (22,23,24), chaque biellette étant reliée en rotation à un chariot arrière (10) et chaque chariot avant (9) portant un quatrième organe de commande (31) venant se loger et se déplacer dans un premier chemin de guidage (21).

2. Le dispositif selon la revendication 1, dans lequel les premiers, seconds et troisièmes organes de commande (32,33,34) sont des plots de commande fixés aux biellettes sur leur face interne par rapport à l'ouverture pour coulisser respectivement dans les seconds, troisièmes et quatrièmes chemins de guidage (22,23,24).

3. Le dispositif selon la revendication 1, dans lequel le premier et le second organes de commande (32,33) sont superposés à un extrémité de la biellette en position de fermeture du pavillon, le troisième organe de commande (34) étant disposé à l'autre extrémité de la billette.

4. Le dispositif selon la revendication 1, dans lequel une biellette (7) est relié à un chariot arrière (10) par un plot de rotation (35) fixé à la biellette sur sa face extérieure par rapport à l'ouverture, le chariot arrière ayant un évidement de rotation (25) pour recevoir le plot de rotation (35), le plot de rotation (35) tournant librement dans l'évidement de rotation(25).

5. Le dispositif selon les revendications 2 et 4, dans lequel le plot de rotation (35) et le troisième plot de commande (34) ont des axes longitudinaux sensiblement superposés en position de fermeture du pavillon.

6. Le dispositif selon la revendication 1, dans lequel un premier chemin de guidage (21) comporte, dans la direction avant vers arrière d'une coulisse, une partie A sensiblement horizontale suivie d'une partie B incurvée se rapprochant du pavillon.

7. Le dispositif selon la revendication 1, dans lequel un second chemin de guidage (22) comporte, dans la direction avant vers arrière d'une coulisse, une partie C incurvée se rapprochant du pavillon suivie d'une partie D sensiblement horizontale.

8. Le dispositif selon la revendication 1, dans lequel un troisième chemin de guidage (23) comporte, dans la direction avant vers arrière d'une coulisse, une partie E sensiblement horizontale suivie d'une partie F incurvée se rapprochant du pavillon.

9. Le dispositif selon la revendication 1, dans lequel le quatrième chemin de guidage (24) comporte, dans la direction avant vers arrière d'une coulisse, une partie G incurvée s'éloignant du pavillon suivie d'une partie H sensiblement horizontale elle même suivie d'une partie I incurvée se rapprochant du pavillon.

10. Le dispositif selon la revendication 9, dans lequel la partie G incurvée s'éloignant du pavillon du quatrième chemin de guidage a une extrémité débouchante (26) pour libérer le troisième organe de commande (34) du quatrième chemin de guidage (24) en position d'entrebâillement du panneau mobile.

11. Le dispositif selon la revendication 1, dans lequel un chariot avant (9) et un chariot arrière (10) sont commandés en translation par le même câble (11).

12. Le dispositif selon la revendication 1, dans lequel chaque coulisse (3) comporte un premier organe de verrouillage (50) à son extrémité avant pour bloquer le déplacement en translation des chariots en position d'entrebâillement du panneau mobile.

13. Le dispositif selon la revendication 12, dans lequel le premier moyen de verrouillage (50) est constitué par une découpe en U dans l'épaisseur de la coulisse (3) et à son extrémité avant, l'ouverture du U étant en vis-à-vis du pavillon pour venir en prise avec un organe complémentaire fixé au rail (5) en vis-à-vis de la coulisse.

14. Le dispositif selon la revendication 1, dans lequel chaque coulisse (3) comporte un second et un troisième moyens de verrouillage (40,41) placés respectivement en-dessous de la coulisse pour bloquer le déplacement vertical du panneau mobile lorsqu'il est translaté au dessus du pavillon.

15. Le dispositif selon la revendication 14, dans lequel le second et le troisième moyens de verrouillage (40,41) sont constitués par des bossages aménagés sur la surface inférieure K de la coulisse (3), les bossages ayant des arêtes formant butées dans des évidements (42,43) aménagés dans le rail (5) en vis-à-vis de la coulisse.

16. Le dispositif selon la revendication 15, dans lequel les bossages (42,43) de la coulisse (3) sont évidés pour former des amortisseurs.

17. Le dispositif selon l'une quelconque des revendications précédentes, dans lequel son épaisseur est inférieure à 18 mm.

18. Le dispositif selon l'une quelconque des revendications précédentes, dans lequel chaque biellette a une forme sensiblement rectangulaire, les second, troisième et quatrième chemins de guidage (22,23,24) d'une coulisse étant aménagés dans un renfoncement (70) de la coulisse, la biellette venant se loger dans ledit renfoncement de la coulisse.

## Claims

1. Device for opening and closing a roof, particularly for a motor vehicle, comprising:
- a pair of rails (5) secured to the top of the roof (8) of the vehicle, on either side of the opening in the roof;
- a pair of forward carriages (9) and a pair of rear carriages (10), which are displaceable longitudinally in the rails, the displacement of said carriages being controlled by a pair of cables (11);
- a mechanical means of articulation in a functional relationship with the carriages, and a pair of slides (3) bearing a mobile panel (1) for half-opening the mobile panel and sliding it above the roof of the vehicle, each slider having a forward portion and a rear portion;
**characterised in that** the mechanical means of articulation comprises:
- first guide tracks (21) provided in the thickness of the slide at the front of the latter;
- second guide tracks (22) provided in the thickness of the slide, at the rear of the latter;
- third guide tracks (23) provided in the thickness of the slide and substantially superimposed on the second guide tracks (22);
- fourth guide tracks (24) provided in the thickness of the slide and to the rear of the second and third guide tracks (22, 23);
- a pair of connecting rods (7), each carrying a first, a second and a third control means (32, 33, 34),which may be lodged in and displaced in a second, third and fourth guide track (22, 23, 24), each connecting rod being rotatably connected to a rear carriage (10), and each forward carriage (9) carrying a fourth control means (31) which may be lodged and displaced in a first guide track (21).

2. Device according to claim 1, in which the first, second and third control means (32, 33, 34) are control pins secured to the connecting rods on their internal face with respect to the opening, in order to slide respectively in the second, third and fourth guide tracks (22, 23, 24).

3. Device according to claim 1, in which the first and second control means (32, 33) are superimposed on one end of the connecting rod in the closed position of the roof, the third control means (34) being located at the other end of the connecting rod.

4. Device according to claim 1, in which a connecting rod (7) is connected to a rear carriage (10) by a rotatable pin (35) secured to the connecting rod by its external face with respect to the opening, the rear carriage having a rotational recess (25) for receiving the rotatable pin (35), the rotatable pin (35) rotating freely in the rotational recess (25).

5. Device according to claims 2 and 4, in which the rotatable pin (35) and the third control pin (34) have longitudinal axes substantially superimposed in the closed position of the roof.

6. Device according to claim 1, in which a first guide track (21) comprises, in the forward-to-rear direction of a slide, a substantially horizontal portion A followed by an inwardly-curved portion B which is close to the roof.

7. Device according to claim 1, in which a second guide track (22) comprises, in the forward-to-rear direction of a slide, an inwardly-curved portion C which is close to the roof, followed by a substantially horizontal portion D.

8. Device according to claim 1, in which a third guide track (23) comprises, in the forward-to-rear direction of a slide, a substantially horizontal portion E followed by an inwardly-curved portion F which is close to the roof.

9. Device according to claim 1, in which the fourth guide track (24) comprises, in the forward-to-rear direction of a slide, an inwardly-curved portion G which diverges from the roof, followed by a substantially horizontal portion H, itself followed by an inwardly-curved portion I which is close to the roof.

10. Device according to claim 9, in which the inwardly-curved portion G of the fourth guide track which diverges from the roof has a clear end (26) in order to free the third control means (34) from the fourth guide track (24) in the half-open position of the mobile panel.

11. Device according to claim 1, in which the displacement of a forward carriage (9) and of a rear carriage (10) are controlled by the same cable (11).

12. Device according to claim 1, in which each slide (3) comprises a first locking means (50) at its forward end in order to prevent displacement of the carriages in the half-open position of the mobile panel.

13. Device according to claim 12, in which the first locking means (50) is made up of a U-shaped cut-out portion in the thickness of the slide (3) and at its forward end, the opening of the 'U' facing the roof in order to come into engagement with a complementary member secured to the rail (5) facing the slide.

14. device according to claim 1, in which each slide (3) comprises a second and third locking means (40, 41) respectively placed beneath the slide in order to prevent vertical displacement of the mobile panel when it is moved on the top of the roof.

15. Device according to claim 14, in which the second and third locking means (40, 41) are made up of bosses provided on the lower surface K of the slide (3), the bosses having peaks forming stops in recesses (42, 43) provided in the rail (5) facing the slide.

16. Device according to claim 15, in which the bosses (42, 43) of the slide (3) are recessed to form dampers.

17. Device according to any one of the preceding claims, in which its thickness is less than 18 mm.

18. Device according to any one of the preceding claims, in which each connecting rod has a substantially rectangular shape, the second, third and fourth guide tracks (22, 23, 24) of a slide being provided in an indentation (70) of the slide, the connecting rod lodging in the said indentation of the slide.

## Patentansprüche

1. Öffnungs- und Schließvorrichtung für Dach, insbesondere für Kraftfahrzeug, die aufweist:
- ein Paar Schienen (5), die beidseits von einer Öffnung in dem Dach auf der Oberseite des Dachs (8) des Fahrzeugs befestigt sind;
- ein Paar vordere Schlitten (9) und ein Paar hintere Schlitten (10), die in Längsverschiebung in den Schienen beweglich sind, wobei die Schlitten in Parallelverschiebung von einem Paar Kabel (11) gesteuert werden;
und
- ein Gelenkmechanismus in funktionaler Verbindung mit den Schlitten und einem Paar Gleitführungen (3), die eine bewegliche Platte (1) tragen, um die bewegliche Platte anzuheben und sie über das Dach des Fahrzeugs zu schieben, wobei jede Gleitführung ein Vorderteil und ein Hinterteil hat;
dadurch gekennzeichnet, daß der Gelenkmechanismus:
- erste Führungswege (21) aufweist, die in der Dicke der Gleitführung vorne an ihr angebracht sind;
- zweite Führungswege (22) aufweist, die in der Dicke der Gleitführung hinten an ihr angebracht sind;
- dritte Führungswege (23) aufweist, die in der Dicke der Gleitführung angebracht und praktisch über die zweiten Führungswege (22) gelegt sind;
- vierte Führungswege (24) aufweist, die in der Dicke der Gleitführung und hinten an den zweiten und dritten Führungswegen (22,23) angebracht sind;
- ein Paar Schwingarme (7) aufweist, die jeweils ein erstes, ein zweites und ein drittes Steuerorgan (32,33,34) tragen, die sich jeweils in einem zweiten, dritten und vierten Führungsweg (22,23,24) anordnen und verschieben, wobei jeder Schwingarm in Drehung mit einem hinteren Schlitten (10) verbunden ist, und wobei jeder vordere Schlitten (9) ein viertes Steuerorgan (31) trägt, das sich in einem ersten Führungsweg (21) anordnet und verschiebt.

2. Vorrichtung gemäß Anspruch 1, bei der die ersten, zweiten und dritten Steuerorgane (32,33,34) Steuer-Steckstellen sind, die an den Schwingarmen auf ihrer Innenseite bezüglich der Öffnung befestigt sind, um jeweils in den zweiten, dritten und vierten Führungswegen (22,23,24) zu gleiten.

3. Vorrichtung gemäß Anspruch 1, bei der das erste und das zweite Steuerorgan (32,33) an einem Ende des Schwingarms in Schließstellung des Dachs übereinandergelegt sind, wobei das dritte Steuerorgan (34) am anderen Ende des Schwingarms angeordnet ist.

4. Vorrichtung gemäß Anspruch 1, bei der ein Schwingarm (7) mit einem hinteren Schlitten (10) durch einen Drehstift (35) verbunden ist, der an dem Schwingarm auf seiner Außenseite bezüglich der Öffnung befestigt ist, wobei der hintere Schlitten eine Drehaussparung (25) hat, um den Drehstift (35) aufzunehmen, wobei sich der Drehstift (35) frei in der Drehaussparung (25) dreht.

5. Vorrichtung gemäß den Ansprüchen 2 und 4, bei der der Drehstift (35) und die dritte Steuer-Steckstelle (34) in Schließstellung des Dachs praktisch übereinandergelegte Längsachsen haben.

6. Vorrichtung gemäß Anspruch 1, bei der ein erster Führungsweg (21) in der Richtung von vorne nach hinten einer Gleitführung einen praktisch horizontalen Teil A gefolgt von einem gekrümmten, sich dem Dach nähernden Teil B aufweist.

7. Vorrichtung gemäß Anspruch 1, bei der ein zweiter Führungsweg (22) in der Richtung von vorne nach hinten einer Gleitführung einen gekrümmten, sich dem Dach nähernden Teil C gefolgt von einem praktisch horizontalen Teil D aufweist.

8. Vorrichtung gemäß Anspruch 1, bei der ein dritter Führungsweg (23) in der Richtung von vorne nach hinten einer Gleitführung einen praktisch horizontalen Teil E gefolgt von einem gekrümmten, sich dem Dach nähernden Teil F aufweist.

9. Vorrichtung gemäß Anspruch 1, bei der der vierte Führungsweg (24) in der Richtung von vorne nach hinten einer Gleitführung einen gekrümmten, sich von dem Dach entfernenden Teil G gefolgt von einem praktisch horizontalen Teil H aufweist, der selbst von einem gekrümmten, sich dem Dach nähernden Teil I gefolgt ist.

10. Vorrichtung gemäß Anspruch 9, bei der der gekrümmte, sich von dem Dach entfernende Teil G des vierten Führungsweges ein herauspringendes Ende (26) hat, um das dritte Stuerorgan (34) des vierten Führungsweges (24) in Hebestellung der beweglichen Platte freizugeben.

11. Vorrichtung gemäß Anspruch 1, bei der ein vorderer Schlitten (9) und ein hinterer Schlitten (10) in Parallelverschiebung von demselben Kabel (11) gesteuert werden.

12. Vorrichtung gemäß Anspruch 1, bei der jede Gleitführung (3) ein erstes Verriegelungsorgan (50) an ihrem Vorderende aufweist, um die Verschiebung in Translation der Schlitten in Hebestellung der beweglichen Platte zu blockieren.

13. Vorrichtung gemäß Anspruch 12, bei der die erste Verriegelungseinrichtung (50) von einem Ausschnitt in U-Form in der Dicke der Gleitführung (3) und an ihrem Vorderende gebildet ist, wobei die Öffnung des U gegenüber dem Dach liegt, um in ein komplementäres Organ einzugreifen, das an der Schiene (5) gegenüber der Gleitführung befestigt ist.

14. Vorrichtung gemäß Anspruch 1, bei der jede Gleitführung eine zweite und eine dritte Verriegelungseinrichtung (40,41) aufweist, die jeweils unterhalb der Gleitführung angeordnet sind, um die vertikale Verschiebung der beweglichen Platte zu blockieren, wenn sie oberhalb des Dachs parallelverschoben wird.

15. Vorrichtung gemäß Anspruch 14, bei der die zweite und die dritte Verriegelungseinrichtung (40,41) von auf der Unterfläche K der Gleitführung (3) angebrachten Höckern gebildet sind, wobei die Höcker Kanten haben, die Anschläge in Aussparungen (42,43) bilden, die in der Schiene (5) gegenüber der Gleitführung angebracht sind.

16. Vorrichtung gemäß Anspruch 15, bei der die Höcker (42,43) der Gleitführung ausgehöhlt sind, um Dämpfer zu bilden.

17. Vorrichtung gemäß irgendeinem der vorherigen Ansprüche, deren Dicke unter 18 mm liegt.

18. Vorrichtung gemäß irgendeinem der vorherigen Ansprüche, bei der jeder Schwingarm eine praktisch rechteckige Form hat, wobei der zweite, dritte und vierte Führungsweg (22,23,24) einer Gleitführung in einem Rücksprung (70) der Gleitführung angebracht sind, und wobei sich der Schwingarm in dem Rücksprung der Gleitführung anordnet.
